# EUROPEAN PATENT SPECIFICATION

(11) **EP 1 950 474 B1**
(45) Date of publication and mention of the grant of the patent: **21.08.2013**
(21) Application number: 06822510.1
(22) Date of filing: 27.10.2006
(51) Int. Cl.: F16J 15/14, F16J 15/10, F16J 15/06, B29C 65/02, F24F 13/02, F16L 21/035

(54) **METHOD OF MANUFACTURING GASKET AND SEAL STRUCTURE**
VERFAHREN ZUR HERSTELLUNG EINER DICHTUNG UND DICHTUNGSSTRUKTUR
PROCEDE DE FABRICATION D'UNE STRUCTURE DE JOINT ET D'ETANCHEITE

(30) Priority: 28.10.2005 JP 2005315042
(43) Date of publication of application: 30.07.2008
(73) Proprietor: Bridgestone Corporation, Tokyo 104-8340 (JP)
(72) Inventor: URANAKA, Masaki c/o BRIDGESTONE CORPORATION, 1048340, Chuo-ku, Tokyo (JP)
(74) Representative: Waldren, Robin Michael
(86) International application number: PCT/JP2006/321549
(87) International publication number: WO 2007/049763

(56) References cited:
- EP-A1- 1 538 375
- WO-A1-96/16793
- GB-A- 2 010 418
- JP-A- 60 237 267
- JP-A- 2001 280 507
- JP-A- 2004 108 533

## Description

### Technical Field

The present invention relates to a method of manufacturing a gasket and a seal structure, particularly, a method of manufacturing a gasket and a seal structure, which are capable of preventing a gasket from peeling off during assembly.

### Background Art

A hard disk device for a computer has been recently improved in performance and miniaturization to have a complicated structure, and only little dust may cause trouble. Accordingly, the necessity of dustproof rises in actual use, and a gasket is generally used in a seal part between a body and a cover for the purpose of sealing a hard disk case formed from the body and the cover to prevent dust from entering.
Patent Reference 1: Japanese Patent Application Laid-Open (JP-A) No. 2003-247644 Attention is drawn to the disclosure of GB 2, 010, 418.

### Disclosure of the Invention

### Problems to be Solved by the Invention

A conventional gasket, however, has the following problems.

For example, a cover is faced to a body and both of them are threadably fixed after the gasket is mounted to the cover. In this case, however, once an operator fits a screw hole at the body side to a circular hole at the cover side while displacing the cover and the body which have been faced to each other, it may be caused that the gasket is laterally rubbed, a part of the gasket is peeled off from the cover, the peeled-off part protrudes out of a part to be sealed, and a sealing defect occurs.

A flange portion is formed on the outer periphery of the cover. In the conventional case, however, the gasket is formed so as not to be in contact with the flange portion.

It can be considered that the width of the gasket should be increased in order to prevent the gasket from peeling off due to the lateral rubbing. In a miniaturized hard disk device, however, widening the position of the gasket inward more than the present state is likely to cause a contact of the gasket with components at inner side, and therefore, has limitations.

The present invention is to solve the above problems. An object of the present invention is to provide a method of manufacturing a gasket and a seal structure capable of suppressing the peeling-off of the gasket during assembly and performing reliable sealing.

### Means for Solving the Problems

The invention provides a method of manufacturing a gasket, according to claim 1.

Now, the method of manufacturing the gasket according to claim 1 will be described.

At the time of forming the gasket for sealing the space between the first member and the second member, the flange portion is formed at the outer side of the seal surface of any one of the first member and the second member.

Liquid hardening resin is continuously extruded onto the seal surface where the flange portion is formed to form the gasket. In the first extrusion step, the hardening resin is continuously extruded onto the seal surface (single stroke along the periphery of the member for one circuit, for example) such that the resin is in contact with the side surface of the flange portion and the height of the portion in contact with the flange portion is lower than the height of the flange portion. In the subsequent extrusion step, liquid hardening resin is further extruded continuously onto the extruded resin such that the liquid resin is in contact with the side surface of the flange portion and the height of the portion in contact with the flange portion is lower than the height of the flange portion (so as to be able to achieve the height of the gasket).

The hardening resin may be hardened after all of the extrusion steps are completed, and may be hardened by every extrusion step.

The gasket formed and hardened as described above is fixed to the seal surface and the side surface of the flange portion. Accordingly, it is difficult to peel off the gasket against the lateral force (the force in a direction parallel to the seal surface) acting during assembly and the like, by comparison with the case where the gasket is fixed only to the seal surface. The word "liquid" in the present specification means liquidity and includes a semi-liquid state with high viscosity.

The invention provides a method of manufacturing a gasket, according to claim 2.

Now, the method of manufacturing the gasket of claim 2 will be described.

The method of manufacturing the gasket of claim 2 is different in the first extrusion step from the method of manufacturing the gasket of claim 1. The final shape of the gasket, however, is almost the same as that of the gasket formed by the method of manufacturing the gasket of claim 1, and the effects due to the method of manufacturing the gasket of claim 2 are also similar to those due to the method of manufacturing the gasket of claim 1.

The invention according to claim 3 is the method of manufacturing a gasket according to claim 1 or 2, wherein the liquid hardening resin is further extruded onto the liquid hardening resin extruded in a preceding extrusion step.

In the method of manufacturing the gasket of claim 3, the height of the gasket can be achieved since the liquid hardening resin is piled. The hardening resin is hardened after the liquid hardening resin is piled.

The invention according to claim 4 is the method of manufacturing a gasket according to claim 1 or 2, wherein the liquid hardening resin extruded in a preceding extrusion step is hardened and, then, the liquid hardening resin is extruded onto the hardened liquid hardening resin.

In the method of manufacturing the gasket of claim 4, the extruded liquid hardening resin in the preceding extrusion step is hardened, and then, the liquid hardening resin is extruded onto the hardened liquid hardened resin. This allows the height of the gasket to be achieved.
The invention according to claim 5 is the method of manufacturing a gasket according to any one of claims 1 to 4, wherein the height of the gasket is set within a range of 0.1 to 5.0 mm.

In the method of manufacturing the gasket of claim 5, the height of the gasket is set within the range of 0.1 to 5.0 mm. Accordingly, a situation in which the shape at the time of coating cannot be maintained as a result of the hardening resin flowing or the width thereof increasing before the hardening resin is hardened, does not occur.

The invention according to claim 6 is the method of manufacturing a gasket according to any one of claims 1 to 5, wherein a ratio A/B of the height A of the gasket to a width B of the gasket is set within a range of 0.5 to 5.0.

In the method of manufacturing the gasket of claim 6, the ratio A/B of the height A of the gasket to the width B of the gasket is set within the range of 0.5 to 5.0. Accordingly, it will not occur that the hardening resin flows or the width thereof increases before the hardening resin is hardened and consequently the shape at the time of coating cannot be maintained.

The seal structure according to claim 7 is a seal structure having a gasket formed by the method of manufacturing a gasket of any one of claims 1 to 6.

The seal structure of claim 7 has the gasket formed by the method of manufacturing a gasket of any one of claims 1 to 6. Accordingly, the seal structure is strong against the lateral force with respect to the gasket during assembly.

### Effect of the Invention

As described above, due to the method of manufacturing a gasket and a seal structure of the present invention, an excellent effect of suppressing the peeling-off of the gasket during assembly and performing reliable sealing can be achieved.

### Brief Description of the Drawings

Fig. 1 is a front view of a cover on which a gasket is formed.
Fig. 2 is a sectional view (a sectional view along a line 2-2 in Fig. 1) of a part where the gasket is formed.
Fig. 3A is a sectional view showing a state where a gasket agent of a first circuit is extruded.
Fig. 3B is a sectional view showing a state where a gasket agent of a second circuit is extruded.
Fig. 4 is a sectional view of a doubly piled gasket agent.
Fig. 5 is a sectional view of the doubly piled gasket agent.
Fig. 6 is a sectional view of a gasket agent extruded three times.

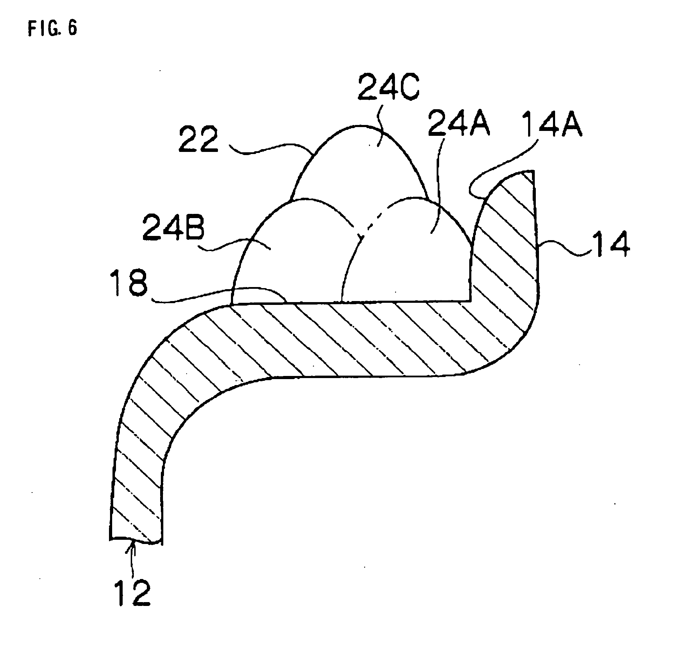

Fig. 6 is a sectional view of a gasket agent extruded six times.

### Best Mode for Carrying Out the Invention

Now, an example of an embodiment of the invention will be described with reference to the drawings.

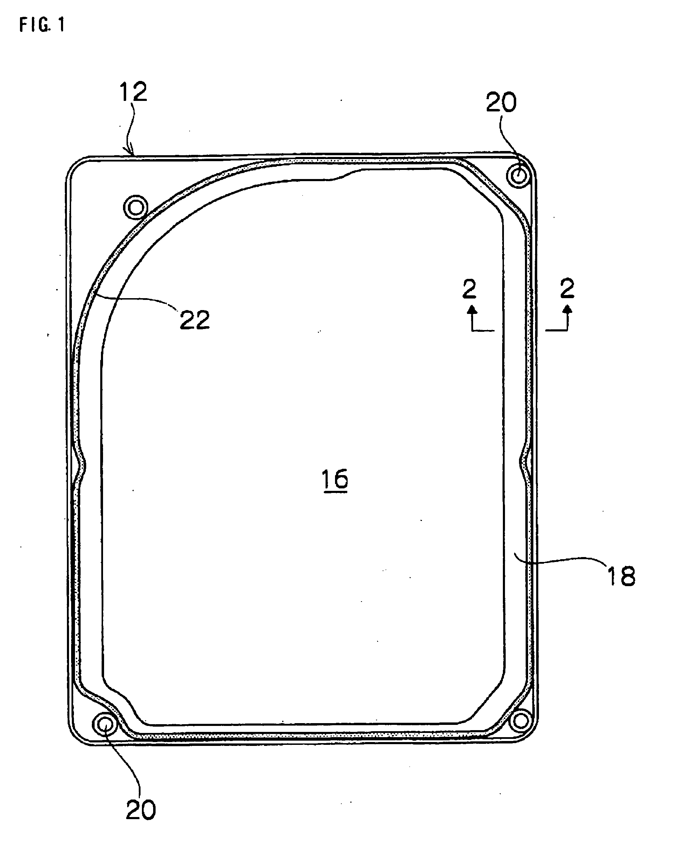

A hard disk drive case in accordance with the embodiment is formed from a rectangular cover 12, which is a press-formed article of a metal plate as shown in plan view of Fig. 1, and a box-shaped main body (not shown) assembled with the cover 12.

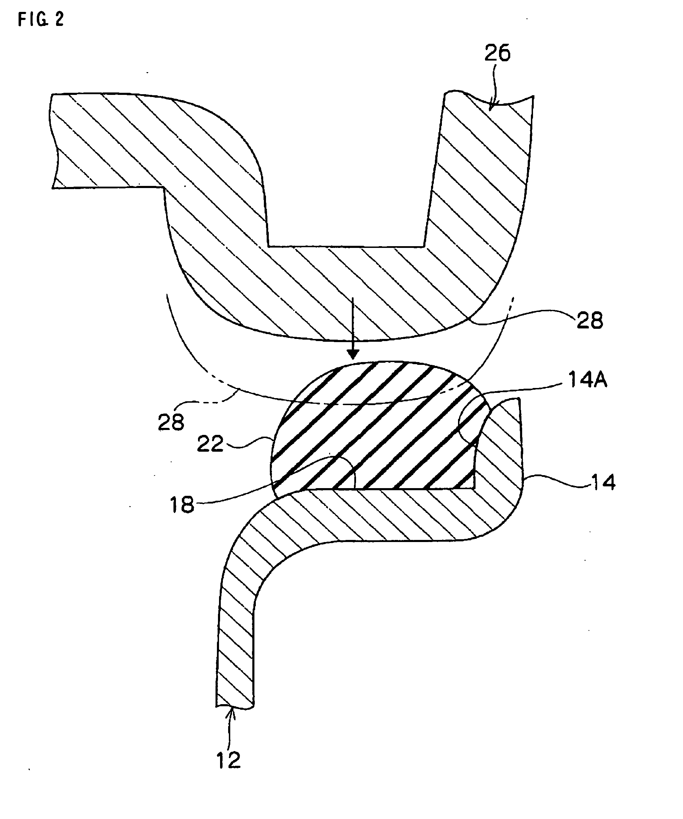

A flange 14 having a predetermined height is formed on an outer circumferential portion of the cover 12, as shown in Figs. 1 and 2. At the central portion of the cover 12, a recessed portion 16 is formed to escape from an unillustrated main body of the hard disk device.

A flat gasket forming surface 18 is formed at the cover 12 between the flange 14 and the recessed portion 16. In the four corners of the cover 12, circular holes 20 through which screws used for mounting the cover 12 to the main body pass are formed.

An elastic gasket 22 is formed on the gasket forming surface 18.

The gasket 22 is formed from a hardening material (referred to as a gasket agent 24, hereinafter), which is originally in a liquid state having viscosity and can hardened (with elasticity as a gasket, however) or can be hardened after extruded to form the gasket 22.

As the gasket agent 24, a gasket material disclosed in JP-A No. 2003-7047 can be used, for example. Other gasket agents may be also used. The gasket agent 24 in the embodiment is a material which is hardened with ultraviolet irradiation.

Now, a method of forming the gasket 22 in accordance with the embodiment will be described herebelow.

In a conventional way, a liquid gasket material is extruded with an extrusion port being moved by means of a three-dimensional automatic coating device in order to form the gasket 22 on the gasket forming surface 18. The embodiment, however, is different from the conventional example in a point that the extrusion port is moved for one circuit along the periphery of the cover 12 (single stroke without passing through the same place again) to form the gasket in the conventional example while the extrusion port is moved for plural circuits in the embodiment.

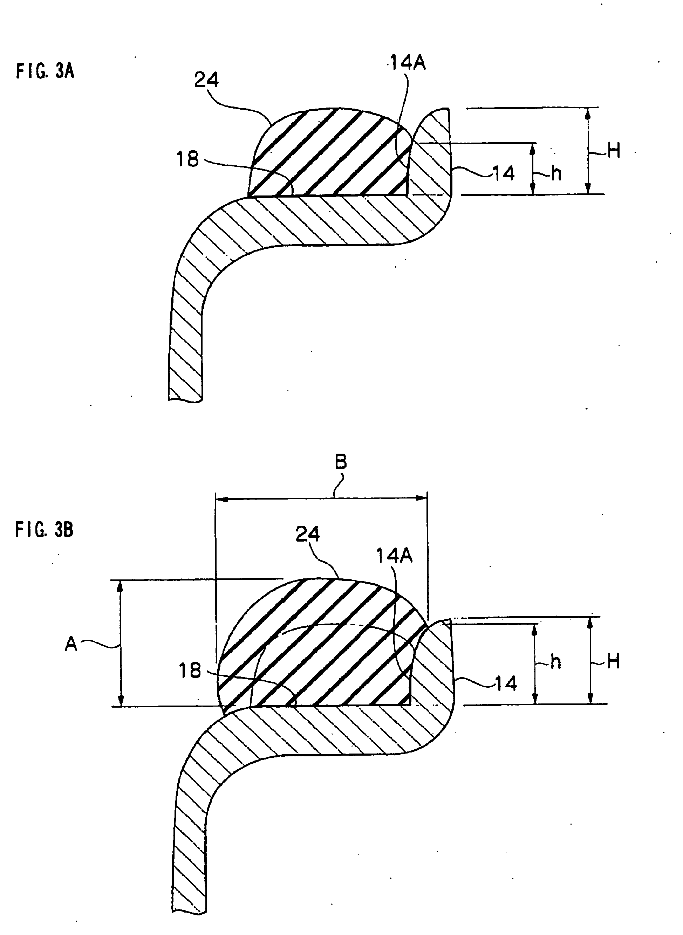

More concretely, in the first circuit, the gasket forming surface 18 is faced upward as shown in Fig. 3A while the liquid gasket agent 24 is extruded onto the gasket forming surface. At this time, the gasket agent 24 is arranged to be in contact with an inner side surface 14A of the flange 14. The height "h" of a portion where the gasket agent 24 and the inner side surface 14A are in contact is set lower than the height H of the flange (a dimension from the gasket forming surface 18 to an upper end of the flange 14).

In the embodiment, an extrusion of the second circuit is continuously conducted following the first circuit. The extrusion of the second circuit is conducted onto an extruded portion from the first circuit. At this time, in the same manner as in the first circuit, the gasket agent 24 is arranged to be in contact with the inner side surface 14A of the flange 14 while the height "h" of the portion where the gasket agent 24 is in contact with the inner side surface 14A is set lower than the height H of the flange, as shown in Fig. 3B. The gasket agent 24 is doubly piled in the embodiment. Accordingly, the height of the gasket agent 24 after the two circuits can be set higher than the height H of the flange 14. In the embodiment, the height "h" of the portion where the gasket agent 24 is in contact with the inner side surface 14A in the first circuit is set lower than the height H of the flange 14, as described above. Accordingly, the height is stable even when the gasket agent 24 is extruded for the second circuit continuously.

Subsequently, ultraviolet is irradiated to the gasket agent 24 to solidify the gasket agent 24, whereby the gasket 22 having elasticity like rubber is completed on the gasket forming surface (see Fig. 1).

A main body 26 is faced and screwed with respect to the cover 12 on which the gasket 22 is formed, as shown in Fig. 2, whereby the cover 12 is mounted to the main body 26. A convex portion 28 of the main body 26 then abuts with the gasket 22 to compress the gasket 22 (a double-dashed line in Fig. 2 shows a position of the convex portion 28 at the time of the completion of the assembly), such that the inside of the hard disk drive case is sealed.

In some cases, the cover 12 and the main body 26 are displaced in a state where the gasket 22 is in contact with the main body 26 before screwing for the purpose of positioning the circular holes 20 of the cover 12 and holes (not shown) of the main body 26. At this time, a lateral (parallel to the gasket forming surface 18) force acts on the gasket 22. A side portion of the gasket 22 is fixed to the inner side surface 14A of the flange 14 at most of the periphery of the gasket 22 in the embodiment. Accordingly, it is difficult to peel off the gasket 22 from the gasket forming surface 18 even when the lateral force acts on the gasket 22.

When the lateral force acts in the case where the gasket 22 is fixed only to the gasket forming surface 18, for example, stress pulling the gasket 22 upward to peel off the gasket 22 acts at one end (at an inputting side of the lateral force) of a portion where the gasket 22 is fixed in sectional view. This may causes the gasket 22 to be peeled off.

On the other hand, in the case that a bottom surface of the gasket 22 is fixed to the gasket forming surface 18 while a side surface of the gasket 22 is fixed to the inner side surface of the flange 14, as in the embodiment, it is difficult to peel off the gasket 22 when the lateral force acts from the flange side, for example, since the side surface of the gasket 22 is also fixed to the inner side surface of the flange 14 and the fixing area increases at the flange side. When the lateral force acts from a direction opposite to the above, the side surface of the flange 14 plays a roll of a screen to prevent the gasket 22 from moving to the flange side. Accordingly, the stress acting on the end at the inputting side of the lateral force does not increase, and the peeling-off of the gasket 22 is to be suppressed.

The gasket 22 in accordance with the embodiment can thus prevent a sealing defect caused by the peeling-off of the gasket 22 from occurring.

In the embodiment, a part of the gasket 22 is not in contact with the flange 14. This is not a matter, however, since it is confirmed in advance by an experiment or the like that the gasket 22 does not be peeled off when the lateral force acts.

The height of the gasket 22 is preferably set within a range of 0.1 to 5.0 mm. This is for the purpose of preventing the case from occurring that the gasket agent 24 flows or the width thereof increases before the liquid gasket agent 24 is hardened, and consequently the shape at the time of coating cannot be maintained.

Further, the ratio A/B of the height A of the gasket 22 to the width B of the gasket 22 is preferably set within a range of 0.5 to 5.0. This is for the purpose of preventing the case from occurring that the gasket agent 24 flows or the width thereof increases before the liquid gasket agent 24 is hardened, and consequently the shape at the time of coating cannot be maintained.

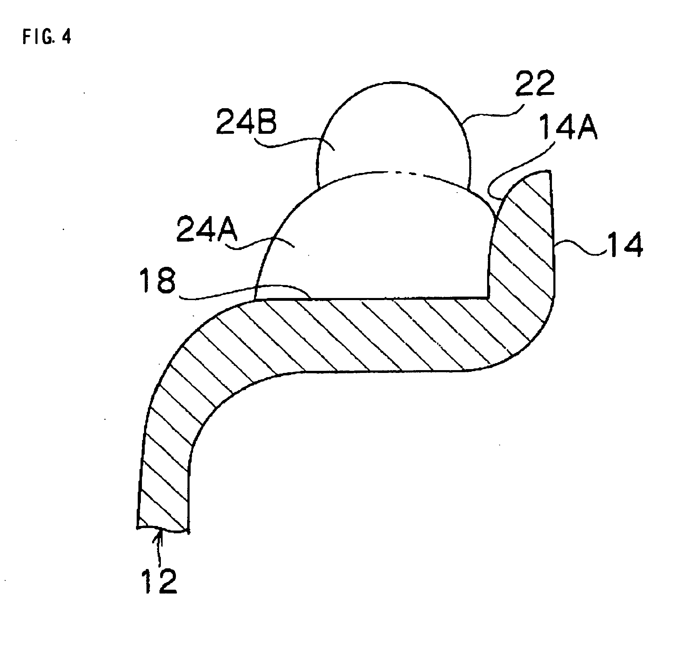

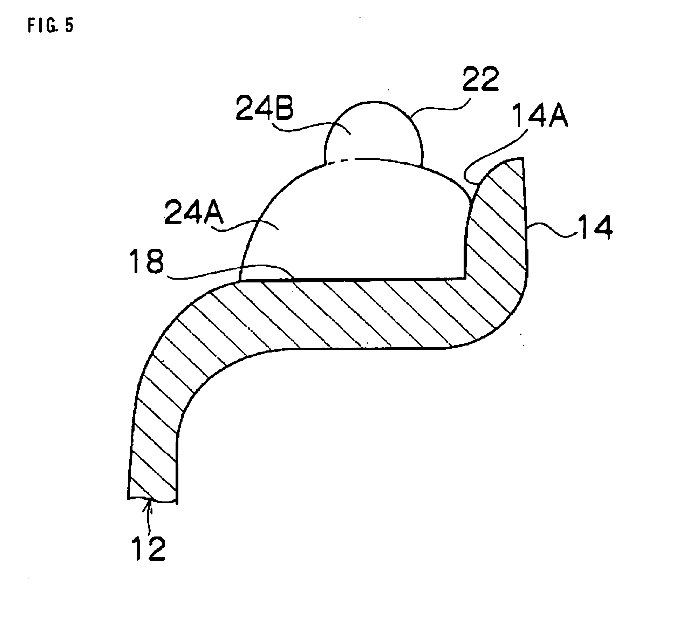

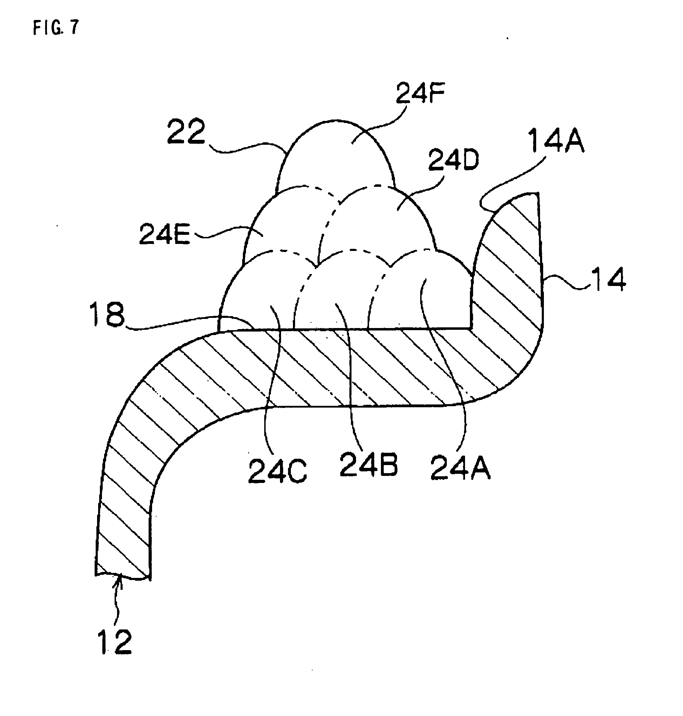

Moreover, the extrusion port is moved continuously for two circuits to pile the gasket agent 24 on the gasket forming surface in the embodiment. The invention, however, is not limited to the above. It may be possible to harden the gasket agent 24 which is extruded by moving the extrusion port in the first circuit, and further extrude the gasket agent 24 in the second circuit onto the hardened gasket agent 24 of the first circuit to harden the gasket agent 24 of the second circuit, as shown in Figs. 4 and 5 (a reference numeral 24A indicates the gasket material of the first circuit while a reference numeral 24B indicates the gasket material of the second circuit). Furthermore, the number of the circuits carried out by the extrusion port is not limited to two. It may be three or more. It may be possible, for example, to move the extrusion port for three circuits to form the gasket 22 having the shape of a cross section shown in Fig. 6 (a reference numeral 24C indicates the gasket material of the third circuit) or to move the extrusion port for six circuits to form the gasket 22 having the shape of a cross section shown in Fig. 7 (a reference numeral 24D indicates the gasket material of the fourth circuit, a reference numeral 24E indicates the gasket material of the fifth circuit and a reference numeral 24F indicates the gasket material of the sixth circuit).

Additionally, the gasket agent 24 is adhered to the side surface of the flange in the first circuit in the embodiment. It may be possible, however, to adhere the gasket agent 24 to the side surface of the flange in the second or the following circuits without adhering the gasket agent 24 to the side surface of the flange in the first circuit.

Moreover, the gasket agent 24 is extruded for two or more circuits to form the gasket 22 in the embodiment. Only one circuit (single stroke), however, may contribute to form the gasket 22 as long as the gasket agent 24 has high viscosity and the height of the gasket can be achieved.

In the embodiment, the forming of a gasket for sealing a hard disk drive case is described. It goes without saying, however, that the invention is also applicable to an article other than the hard disk drive case.

### Industrial Applicability

The invention is applied to a use which requires preventing a gasket from peeling off during assembly.

### Description of Reference Numerals

12: cover
14: flange
22: gasket
24: gasket agent

## Claims

1. A method of manufacturing a gasket (22) that forms a gasket for sealing a space between a first member and a second member, wherein:
a flange portion (14) rising from a seal surface (18) of any one of the first member and the second member is formed at an outer side of the seal surface; and, when continuously extruding a liquid hardening resin (24) with respect to the seal surface to form the gasket, in a first extrusion step the hardening resin is continuously extruded onto the seal surface such that a portion of the extruded hardening resin is in contact with a side surface (14A) of the flange portion and
**characterized in that** the total height (h) of the portion of the extruded hardening resin in contact with the flange portion is lower than the height (H) of the flange portion and, in a subsequent extrusion step, the hardening resin is continuously extruded onto the extruded hardening resin such that the resin is in contact with the side surface of the flange portion and the total height of the portion of the extruded hardening resin in contact with the flange portion is lower than the height of the flange portion.

2. A method of manufacturing a gasket (22) that forms a gasket for sealing a space between a first member and a second member, wherein:
a flange portion (14) rising from a seal surface (18) of any one of the first member and the second member is formed at an outer side of the seal surface; and
**characterized in that**, when continuously extruding liquid hardening resin (24) with respect to the seal surface to form the gasket, in a first extrusion step the hardening resin is continuously extruded onto the seal surface such that the resin is not in contact with a side surface (14A) of the flange portion and, in a subsequent extrusion step, the hardening resin is continuously extruded onto the extruded hardening resin such that a portion of the extruded hardening resin is in contact with the side surface of the flange portion and the total height of the portion of the extruded hardening resin in contact with the flange portion is lower than the height of the flange portion.

3. The method of manufacturing a gasket of claim 1 or 2, wherein the liquid hardening resin is further extruded onto the liquid hardening resin extruded in a preceding extrusion step.

4. The method of manufacturing a gasket of claim 1 or 2, wherein the liquid hardening resin extruded in a preceding extrusion step is hardened and, then, the liquid hardening resin is extruded onto the hardened liquid hardening resin.

5. The method of manufacturing a gasket of any one of claims 1 to 4, wherein the height of the gasket is set within a range of 0.1 to 5.0 mm.

6. The method of manufacturing a gasket of any one of claims 1 to 5, wherein a ratio A/B of the height A of the gasket to a width B of the gasket is set within a range of 0.5 to 5.0.

7. A seal structure having a gasket formed by the method of manufacturing a gasket of any one of claims 1 to 6.

## Patentansprüche

1. Verfahren zur Herstellung einer Dichtung (22), die eine Dichtung zum Abdichten eines Abstands zwischen einem ersten Konstruktionsteil und einem zweiten Konstruktionsteil bildet, wobei:
ein Flanschteil (14), das von einer Abdichtungsfläche (18) irgend eines des ersten Konstruktionsteils und des zweiten Konstruktionsteils aufsteigt, an einer Außenseite der Abdichtungsfläche gebildet wird; und wenn kontinuierlich ein flüssiges härtendes Harz (24) mit Bezug auf die Abdichtungsfläche unter Bildung der Dichtung extrudiert wird, das härtende Harz in einem ersten Extrusionsschritt kontinuierlich auf die Abdichtungsfläche extrudiert wird, derart, dass ein Teil des extrudierten härtenden Harzes sich in Kontakt mit einer Seitenfläche (14A) des Flanschteils befindet und
**dadurch gekennzeichnet, dass** die Gesamthöhe (h) des Teils des extrudierten härtenden Harzes in Kontakt mit dem Flanschteil niedriger ist als die Höhe (H) des Flanschteils und in einem darauffolgenden Schritt das härtende Harz kontinuierlich auf das extrudierte härtende Harz extrudiert wird, derart, dass das Harz sich in Kontakt mit der Seitenfläche des Flanschteils befindet und die Gesamthöhe des Teils des extrudierten härtenden Harzes in Kontakt mit dem Flanschteil niedriger ist als die Höhe des Flanschteils.

2. Verfahren zur Herstellung einer Dichtung (22), die eine Dichtung zum Abdichten eines Abstands zwischen einem ersten Konstruktionsteil und einem zweiten Konstruktionsteil bildet, wobei:
ein Flanschteil (14), das von einer Abdichtungsfläche (18) irgendeines des ersten Konstruktionsteils und des zweiten Konstruktionsteils aufsteigt, an einer Außenseite der Abdichtungsfläche gebildet wird; und
**dadurch gekennzeichnet, dass**, wenn kontinuierlich flüssiges härtendes Harz (24) mit Bezug auf die Abdichtungsfläche unter Bildung der Dichtung extrudiert wird, das härtende Harz in einem ersten Extrusionsschritt kontinuierlich auf die Abdichtungsfläche extrudiert wird, derart, dass das Harz sich nicht in Kontakt mit einer Seitenfläche (14A) des Flanschteils befindet und in einem darauffolgenden Extrusionsschritt das härtende Harz kontinuierlich auf das extrudierte härtende Harz extrudiert wird, derart, dass ein Teil des extrudierten Harzes sich in Kontakt mit der Seitenfläche des Flanschteils befindet und die Gesamthöhe des Teils des extrudierten härtenden Harzes, der sich in Kontakt mit dem Flanschteil befindet, niedriger ist als die Höhe des Flanschteils.

3. Verfahren zur Herstellung einer Dichtung nach Anspruch 1 oder 2, wobei das flüssige härtende Harz des Weiteren auf das in einem vorherigen Extrusionsschritt extrudierte flüssige härtende Harz extrudiert wird.

4. Verfahren zur Herstellung einer Dichtung nach Anspruch 1 oder 2, wobei das flüssige härtende Harz, das in einem vorherigen Extrusionsschritt extrudiert worden ist, gehärtet wird und dann das flüssige härtende Harz auf das gehärtete flüssige härtende Harz extrudiert wird.

5. Verfahren zur Herstellung einer Dichtung nach einem der Ansprüche 1 bis 4, wobei die Höhe der Dichtung innerhalb eines Bereichs von 0,1 bis 5,0 mm eingestellt wird.

6. Verfahren zur Herstellung einer Dichtung nach einem der Ansprüche 1 bis 5, wobei ein Verhältnis A/B der Höhe A der Dichtung zu einer Breite B der Dichtung innerhalb eines Bereichs von 0,5 bis 5,0 eingestellt wird.

7. Abdichtstruktur, die eine Dichtung aufweist, die durch das Verfahren zur Herstellung einer Dichtung nach einem der Ansprüche 1 bis 6 gebildet wird.

## Revendications

1. Procédé de fabrication d'un joint statique (22) qui forme un joint pour l'étanchéité d'un espace entre un premier élément et un second élément, dans lequel:
une portion formant collerette (14) s'élevant d'une surface d'étanchéité (18) de l'un quelconque du premier élément et du second élément est formée sur un côté externe de la surface d'étanchéité; et, lors de l'extrusion continuelle d'une résine liquide de durcissement (24) par rapport à la surface d'étanchéité pour former le joint, dans une première étape d'extrusion la résine de durcissement est continuellement extrudée sur la surface d'étanchéité de sorte qu'une portion de la résine extrudée de durcissement se trouve en contact avec une surface latérale (14A) de la portion formant collerette et
**caractérisé en ce que** la hauteur totale (h) de la portion de la résine extrudée de durcissement en contact avec la portion formant collerette est inférieure à la hauteur (H) de la portion formant collerette et, dans une étape ultérieure d'extrusion, la résine de durcissement est continuellement extrudée sur la résine extrudée de durcissement de sorte que la résine se trouve en contact avec la surface latérale de la portion formant collerette et la hauteur totale de la portion de la résine extrudée de durcissement en contact avec la portion formant collerette est inférieure à la hauteur de la portion formant collerette.

2. Procédé de fabrication d'un joint statique (22) qui forme un joint pour l'étanchéité d'un espace entre un premier élément et un second élément, dans lequel:
une portion formant collerette (14) s'élevant d'une surface d'étanchéité (18) de l'un quelconque du premier élément et du second élément est formée à un côté externe de la surface d'étanchéité; et
**caractérisé en ce que**, lors de l'extrusion de manière continue d'une résine liquide de durcissement (24) par rapport à la surface d'étanchéité pour former le joint statique, dans une première étape d'extrusion la résine de durcissement est continuellement extrudée sur la surface d'étanchéité de sorte que la résine ne se trouve pas en contact avec une surface latérale (14A) de la portion formant collerette et, dans une étape ultérieure d'extrusion, la résine de durcissement est continuellement extrudée sur la résine extrudée de durcissement de sorte qu'une portion de la résine extrudée de durcissement se trouve en contact avec la surface latérale de la portion formant collerette et la hauteur totale de la portion de la résine extrudée de durcissement en contact avec la portion formant collerette est inférieure à la hauteur de la portion formant collerette.

3. Procédé de fabrication d'un joint statique selon la revendication 1 ou 2, dans lequel la résine liquide de durcissement est en outre extrudée sur la résine liquide de durcissement extrudée dans une étape d'extrusion précédente.

4. Procédé de fabrication d'un joint statique selon la revendication 1 ou 2, dans lequel la résine liquide de durcissement extrudée dans une étape d'extrusion précédente est durcie et, ensuite, la résine liquide de durcissement est extrudée sur la résine liquide de durcissement durcie.

5. Procédé de fabrication d'un joint statique selon l'une quelconque des revendications 1 à 4, dans lequel la hauteur du joint statique est fixée au sein d'une plage de 0,1 à 5,0 mm.

6. Procédé de fabrication d'un joint statique selon l'une quelconque des revendications 1 à 5, dans lequel un rapport A/B de la hauteur A du joint statique à une largeur B du joint statique est fixé à l'intérieur d'une plage de 0,5 à 5,0.

7. Structure d'étanchéité ayant un joint statique formé par le procédé de fabrication d'un joint statique selon l'une quelconque des revendications 1 à 6.
